(19) Europäisches Patentamt European Patent Office Office européen des brevets

(11) **EP 3 528 269 A1**

(12) **EUROPEAN PATENT APPLICATION**
published in accordance with Art. 153(4) EPC

(43) Date of publication:
**21.08.2019 Bulletin 2019/34**

(21) Application number: **17871815.1**

(22) Date of filing: **13.11.2017**

(51) Int Cl.:
***H01G 9/20*** (2006.01)

(86) International application number:
**PCT/JP2017/040825**

(87) International publication number:
**WO 2018/092741 (24.05.2018 Gazette 2018/21)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(30) Priority: **15.11.2016 JP 2016222237**

(71) Applicant: **Fujikura Ltd.**
**Tokyo 135-8512 (JP)**

(72) Inventors:
• **NAKA Keisuke**
**Sakura-shi**
**Chiba 285-8550 (JP)**
• **KATSUMATA Kenji**
**Sakura-shi**
**Chiba 285-8550 (JP)**
• **OKADA Kenichi**
**Sakura-shi**
**Chiba 285-8550 (JP)**

(74) Representative: **Hoffmann Eitle**
**Patent- und Rechtsanwälte PartmbB**
**Arabellastraße 30**
**81925 München (DE)**

(54) **PHOTOELECTRIC CONVERSION ELEMENT**

(57)     Disclosed is a photoelectric conversion element comprising a transparent substrate, at least one photoelectric conversion cell provided on one surface of the transparent substrate and a conductive first current extracting portion provided on the one surface of the transparent substrate and used for extracting a current from the at least one photoelectric conversion cell. The photoelectric conversion cell includes an electrode provided on the one surface of the transparent substrate, a counter substrate facing the electrode and including a metal substrate, and a ring-shaped sealing portion provided between the transparent substrate and the counter substrate. The photoelectric conversion element includes a first external connecting terminal provided on the first current extracting portion, a connecting terminal provided separated from the first external connecting terminal between the first external connecting terminal and the sealing portion on the first current extracting portion and a conductive member connecting the connecting terminal and the metal substrate. A glass material is not directly adhered to a Connecting Terminal-External Connecting Terminal region between the connecting terminal and the first external connecting terminal.

Fig.1

EP 3 528 269 A1

**Description**

TECHNICAL FIELD

The present invention relates to a photoelectric conversion element.

BACKGROUND ART

As a photoelectric conversion element, a photoelectric conversion element using dyes attracts attention since it is inexpensive and high photoelectric conversion efficiency can be obtained, and various developments on the photoelectric conversion element using dyes are performed.

Photoelectric conversion elements using dyes generally includes a transparent substrate and at least one photoelectric conversion cell provided on one surface of the transparent substrate. The photoelectric conversion cell includes an electrode provided on the transparent substrate, a counter substrate facing the electrode and including a metal substrate, a ring-shaped sealing portion provided between the transparent substrate and the counter substrate, an oxide semiconductor layer provided between the electrode and the counter substrate, and a dye supported on the oxide semiconductor layer.

As such a photoelectric conversion element using dyes, for example, a dye-sensitized photoelectric conversion element described in the following patent document 1 is known. In the following patent document 1, disclosed is a photoelectric conversion element which includes conductive first and second current extracting portions each provided on one surface of the transparent substrate and used for extracting a current from the photoelectric conversion cell, a first external connecting terminal provided on the outside of the sealing portion on the first current extracting portion, a connecting terminal provided between the sealing portion and the first external connecting terminal on the first current extracting portion, a second external connecting terminal provided on the outside of the sealing portion on the second current extracting portion, a conductive member connecting the connecting terminal on the first current extracting portion and the metal substrate of the counter substrate, and a glass layer which is composed of glass and which covers and hides the entire region excluding the first external connecting terminal and the second external connecting terminal of the region on the outside of the sealing portion and on the transparent substrate.

CITATION LIST

PATENT DOCUMENT

Patent document 1: JPA2016-103495

SUMMARY OF THE INVENTION

PROBLEM TO BE SOLVED BY THE INVENTION

However, the dye-sensitized photoelectric conversion element described in the above-mentioned patent document 1 has had the following problems.

That is, the dye-sensitized photoelectric conversion element described in the patent document 1 has had room for improvement in that it manufactures a photoelectric conversion element with a lead wire with high yield while having excellent photoelectric conversion characteristic.

The present invention has been made in view of the above circumstances, an object of the present invention is to provide a photoelectric conversion element which is capable of manufacturing a photoelectric conversion element with a lead wire with high yield while having excellent photoelectric conversion characteristic.

MEANS FOR SOLVING PROBLEM

First, the present inventors have noticed the following facts in the process of repeating studies to solve the above problem. That is, in the dye-sensitized photoelectric conversion element described in the above-mentioned patent document 1, when the glass layer is formed at a Connecting Terminal-External Connecting Terminal region between the connecting terminal and the first external connecting terminal of the first current extracting portion composed of a transparent conductive layer such as FTO, the glass layer is formed by printing a paste containing a glass frit in the Connecting Terminal-External Connecting Terminal region and then is fired at a high temperature of about 350 to 600°C. At this time, the present inventors have noticed that a resistance of the first current extracting portion is more increased than that before firing. The present inventors wondered whether this is caused by the fact that the first current extracting portion reacts with some component in the paste and then is etched, or some chemical change occurs in the first current extracting portion. For this reason, the present inventors thought that it is effective to obtain an excellent photoelectric conversion characteristic not to provide the glass layer in the connecting the terminal-external connecting terminal region. Herein, it is also considered to integrate the connecting terminal and the first external connecting terminal without separating the connecting terminal and the first external connecting terminal. In this case, a layer composed of the same material as the connecting terminal and the first external connecting terminal is provided in the connecting the terminal-external connecting terminal region. However, in this case, in a case where a lead wire is connected to the first external connecting terminal of the dye-sensitized solar element by soldering, there is room for improvement in terms of a manufacturing yield of the obtained photoelectric conversion element with a lead wire. The present inventors surmise for this reason that heat easily transfers from the first external connecting terminal to the connecting terminal and finally transfers to the conductive member, and thus problems such as disconnection or resistance increase easily occur. Accordingly, the present inventors have repeated extensive studies to realize a photoelectric conversion element which is capable of manufacturing a photoelectric conversion element with a lead wire with high yield while having excellent photoelectric conversion characteristic and, as a result, found out that the above problem can be solved by the following invention.

That is, the present invention is a photoelectric conversion element including a transparent substrate, at least one photoelectric conversion cell provided on one surface of the transparent substrate and, a conductive first current extracting portion provided on the one surface of the transparent substrate and used for extracting a current from the at least one photoelectric conversion cell, in which the photoelectric conversion cell includes an electrode provided on the one surface of the transparent substrate, a counter substrate facing the electrode and including a metal substrate and a ring-shaped sealing portion provided between the transparent substrate and the counter substrate, the photoelectric conversion element including a first external connecting terminal provided on the first current extracting portion, a connecting terminal provided separated from the first external connecting terminal between the first external connecting terminal and the sealing portion on the first current extracting portion and a conductive member connecting the connecting terminal and the metal substrate, and in which a glass material is not directly adhered to a Connecting Terminal-External Connecting Terminal region between the connecting terminal and the first external connecting terminal.

According to the photoelectric conversion element, the connecting terminal and the first external connecting terminal are separated from each other. For this reason, when a lead wire is connected to the first external connecting terminal of the photoelectric conversion element by soldering, heat is less likely to transfer from the first external connecting terminal to the connecting terminal and is finally less likely to transfer to the conductive member, and thus problems such as disconnection or resistance increase is less likely to occur in the conductive member. For this reason, the photoelectric conversion element can manufacture a photoelectric conversion element with a lead wire with high yield. Further, a glass material is not directly adhered to the Connecting Terminal-External Connecting Terminal region. For this reason, the photoelectric conversion element can have excellent photoelectric conversion characteristic compared to a case where the glass material is directly adhered to the Connecting Terminal-External Connecting Terminal region.

In the above-mentioned photoelectric conversion element, the Connecting Terminal-External Connecting Terminal is exposed, for example.

According to this photoelectric conversion element, the first external connecting terminal and the connecting terminal are separated from each other. For this reason, when a lead wire is connected to the first external connecting terminal of the photoelectric conversion element by soldering, heat is less likely to transfer from the first external connecting terminal to the connecting terminal and is finally less likely to transfer to the conductive member, and thus problems such as disconnection or resistance increase is less likely to occur in the conductive member. For this reason, the photoelectric conversion element can manufacture a photoelectric conversion element with a lead wire with high yield. Further, the Connecting Terminal-External Connecting Terminal region is exposed and nothing is adhered to the Connecting Terminal-External Connecting Terminal region. That is, a glass material such as a glass layer is not directly adhered to the Connecting Terminal-External Connecting Terminal region. For this reason, the photoelectric conversion element can have excellent photoelectric conversion characteristic compared to a case where the glass material such as the glass layer is directly adhered to the Connecting Terminal-External Connecting Terminal region.

It is preferable that the above-mentioned photoelectric conversion element further include a conductive second current extracting portion provided on the one surface of the transparent substrate and used for extracting a current from the at least one photoelectric conversion cell, a second external connecting terminal provided on the second current extracting portion and a current collecting wiring provided on the side facing the one surface of the transparent substrate, in which one end of the current collecting wiring is connected at a position separated from the second external connecting terminal between the second external connecting terminal and the sealing portion on the second current extracting portion, the other end of the current collecting wiring is connected at a position on the outside of the sealing portion on the electrode contained in one photoelectric conversion cell of the at least one photoelectric conversion cell, and a Wiring-External Connecting Terminal region between the one end of the current collecting wiring and the second external connecting terminal is exposed.

In this case, the second external connecting terminal and the one end of the current collecting wiring are separated from each other. For this reason, when a lead wire is connected to the second external connecting terminal of the photoelectric conversion element by soldering, heat is less likely to transfer from the second external connecting terminal to the one end of the current collecting wiring and is finally less likely to transfer to the current collecting wiring, and thus problems such as disconnection or resistance increase is less likely to occur in the current collecting wiring. For this reason, the photoelectric conversion element can manufacture a photoelectric conversion element with a lead wire with higher yield. Further, in the photoelectric conversion element of the present invention, the Wiring-External Connecting Terminal region is exposed and nothing is adhered to the Wiring-External Connecting Terminal region. That is, a glass material such as a glass layer is not directly adhered to the Wiring-External Connecting Terminal region. For this reason, the photoelectric conversion element can have excellent photoelectric conversion characteristic compared to a case where the glass layer is directly adhered to the Wiring-External Connecting Terminal region.

It is acceptable that the photoelectric conversion element further includes a protective layer provided on the side facing the one surface of the transparent substrate, the protective layer covering and protecting the at least one photoelectric conversion cell, in which the protective layer includes a resin layer on the side facing the transparent substrate, the conductive member includes a wiring part, the protective layer covers at least a main surface on the side facing away from the transparent substrate of the wiring part and is fixed at the metal substrate of the at least one photoelectric conversion cell, in a case where the photoelectric conversion element is viewed in a direction orthogonal to the one surface of the transparent substrate, a peripheral edge part of the protective layer extends to the Connecting Terminal-External Connecting Terminal region between the connecting terminal and the first external connecting terminal beyond the connecting terminal, and the resin layer of the peripheral edge part of the protective layer is directly adhered to the Connecting Terminal-External Connecting Terminal region.

According to this photoelectric conversion element, the first external connecting terminal and the connecting terminal are separated from each other. For this reason, when a lead wire is connected to the first external connecting terminal of the photoelectric conversion element by soldering, heat is less likely to transfer from the first external connecting terminal to the connecting terminal and is finally less likely to transfer to the conductive member, and thus problems such as disconnection or resistance increase is less likely to occur in the conductive member. For this reason, the photoelectric conversion element of the present invention can manufacture a photoelectric conversion element with a lead wire with high yield. Further, in a case where the photoelectric conversion element is viewed in a direction orthogonal to the one surface of the transparent substrate, the protective layer covers and protects the photoelectric conversion cell, the peripheral edge portion of the protective layer extends to the Connecting Terminal-External Connecting Terminal region beyond the connecting terminal and the resin layer of the peripheral edge part of the protective layer is directly adhered to the Connecting Terminal-External Connecting Terminal region. That is, a glass material such as a glass layer is not directly adhered to the Connecting Terminal-External Connecting Terminal region. For this reason, the photoelectric conversion element can have excellent photoelectric conversion characteristic compared to a case where the glass material such as the glass layer is directly adhered to the Connecting Terminal-External Connecting Terminal region.

In the photoelectric conversion element, a linear expansion coefficient of the protective layer is preferably smaller than a linear expansion coefficient of the sealing portion.

In this photoelectric conversion element, when the sealing portion expands and contracts in a direction orthogonal to the one surface of the transparent substrate in accordance with an ambient temperature change, in particular, a repetitive stress is easily applied to the main surface of the wiring part of the conductive member on the side facing away from the transparent substrate. In contrast, in the photoelectric conversion element of the present invention, the protective layer covers at least the main surface of the wiring part on the side facing away from the transparent substrate and this protective layer has a linear expansion coefficient smaller than a linear expansion coefficient of the sealing portion. Therefore, the protective layer is less likely to expand and contract than the sealing portion. In addition, in a case where the photoelectric conversion element is viewed in a direction orthogonal to one surface of the transparent substrate, the protective layer covers the photoelectric conversion cell and is fixed at the metal substrate of the photoelectric conversion cell. In addition, the peripheral edge part of the protective layer extends to the Connecting Terminal-External Connecting Terminal region beyond the connecting terminal. In other words, when the photoelectric conversion element is viewed in a direction orthogonal to one surface of the transparent substrate, the protective layer is fixed at the inside and outside of the sealing portion where the variation in the direction orthogonal to one surface of the transparent substrate is the most likely to occur in accordance with the temperature change. In other words, in a case where the photoelectric conversion element is viewed in a direction orthogonal to one surface of the transparent substrate, the protective layer is fixed at a part where the variation in a direction orthogonal to one surface of the transparent substrate in accordance with the temperature change is less likely to occur compared with the sealing portion. For this reason, even if the sealing portion expands and contracts in a direction orthogonal to one surface of the transparent substrate and a repetitive stress is applied to at least the main surface of the wiring part on the side facing away from the transparent substrate, the stress is sufficiently relaxed by the protective layer. For this reason, the occurrence of cracks in at least the main surface of the wiring part on the side facing away from the transparent substrate is sufficiently suppressed.

Therefore, the photoelectric conversion element of the present invention can have excellent durability even when used under an environment having a large temperature change.

In the photoelectric conversion element, the linear expansion coefficient of the protective layer to the linear expansion coefficient of the sealing portion is preferably 0.5 or less.

In this case, even if the sealing portion expands and contracts and a repetitive stress is applied to at least the main surface on the side facing away from the transparent substrate, the stress is more sufficiently relaxed by the protective layer. For this reason, the occurrence of cracks in at least the main surface on the side facing away from the transparent substrate of the wiring part is sufficiently suppressed. Therefore, the photoelectric conversion element can have more excellent durability even when used under an environment having a large temperature change.

In the photoelectric conversion element, the linear expansion coefficient of the covering part to the linear expansion coefficient of the sealing portion is preferably 0.15 or more.

In this case, the occurrence of cracks in the protective layer is more sufficiently suppressed under an environment of a large temperature change.

It is preferable that the photoelectric conversion element further include a conductive second current extracting portion provided on the one surface of the transparent substrate and used for extracting a current from the at least one photoelectric conversion cell, a second external connecting terminal provided on the second current extracting portion and a current collecting wiring provided on the side facing the one surface of the transparent substrate, in which one end of the current collecting wiring is connected at a position separated from the second external connecting terminal between the second external connecting terminal and the sealing portion on the second current extracting portion, the other end of the current collecting wiring is connected at a position on the outside of the sealing portion on the electrode contained in one photoelectric conversion cell of the at least one photoelectric conversion cell, and in a case where the photoelectric conversion element is viewed in a direction orthogonal to the one surface of the transparent substrate, a peripheral edge part of the protective layer extends to the wiring-external connecting terminal region between the one end of the current collecting wiring and the second external connecting terminal beyond the one end of the current collecting wiring, and the resin layer of the peripheral edge part of the protective layer is directly adhered to the Wiring-External Connecting Terminal region.

In this case, the second external connecting terminal and the one end of the current collecting wiring are separated from each other. For this reason, when a lead wire is connected to the second external connecting terminal of the photoelectric conversion element by soldering, heat is less likely to transfer from the second external connecting terminal to the one end of the current collecting wiring and is finally less likely to transfer to the current collecting wiring, and thus problems such as disconnection or resistance increase is less likely to occur in the current collecting wiring. For this reason, the photoelectric conversion element can manufacture a photoelectric conversion element with a lead wire with higher yield. Further, in the photoelectric conversion element of the present invention, in a case where the photoelectric conversion element is viewed in the direction orthogonal to the one surface of the transparent substrate, the peripheral edge part of the protective layer extends to the Wiring-External Connecting Terminal region beyond the one end of the current collecting wiring and the resin layer of the peripheral edge part of the protective layer is directly adhered to the Wiring-External Connecting Terminal region. That is, a glass material such as a glass layer is not directly adhered to the Wiring-External Connecting Terminal region. For this reason, the photoelectric conversion element can have more excellent photoelectric conversion characteristic compared to a case where the glass layer is directly adhered to the Wiring-External Connecting Terminal region.

In the photoelectric conversion element, it is preferable that the resin layer contain a polyimide resin.

In this case, more excellent insulation property can be imparted to the protective layer.

In the photoelectric conversion element, the protective layer is preferably black.

In this case, the photoelectric conversion element is less likely to be degraded even if ultraviolet ray is irradiated from the protective layer side, or heat generated in the photoelectric conversion cell due to a large heat radiation is easily released.


EFFECT OF THE INVENTION

According to the present invention, a photoelectric conversion element which is capable of manufacturing a photoelectric conversion element with a lead wire with high yield while having excellent photoelectric conversion characteristic.


BRIEF DESCRIPTION OF DRAWINGS

Fig. 1 is a plan view showing the first embodiment of a photoelectric conversion element of the present invention.

Fig. 2 is a cut surface end view taken along line II-II of Fig. 1;

Fig. 3 is a plan view showing a pattern of a transparent conductive layer in the photoelectric conversion element of Fig. 1;

Fig. 4 is a plan view showing the photoelectric conversion element of Fig. 1 excluding a protective layer.

Fig. 5 is a cross-sectional view showing a state where the photoelectric conversion element of Fig. 4 excluding a protective layer is cut with a plane crossing the sealing portion;

Fig. 6 is a plan view showing a structure obtained in the middle of the manufacturing method of the photoelectric conversion element of Fig.1;

Fig. 7 is a plan view showing the second embodiment of the photoelectric conversion element of the present invention; and

MODE(S) FOR CARRYING OUT THE INVENTION

<<First embodiment>>

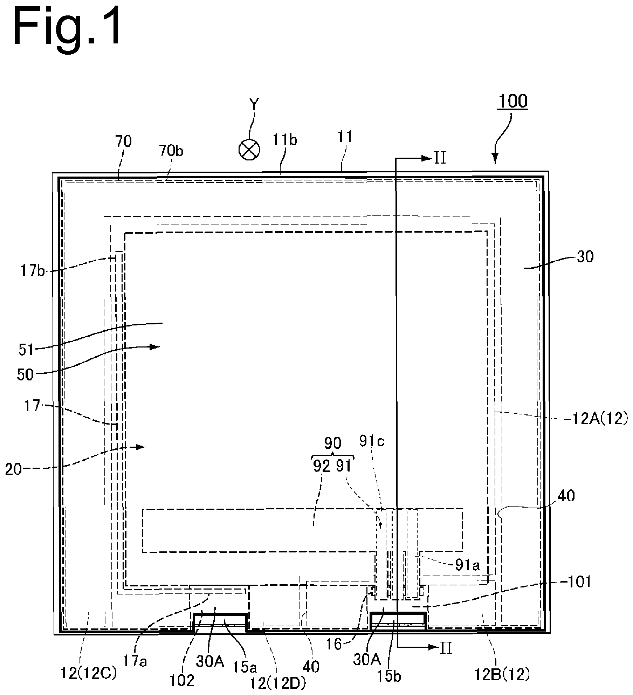

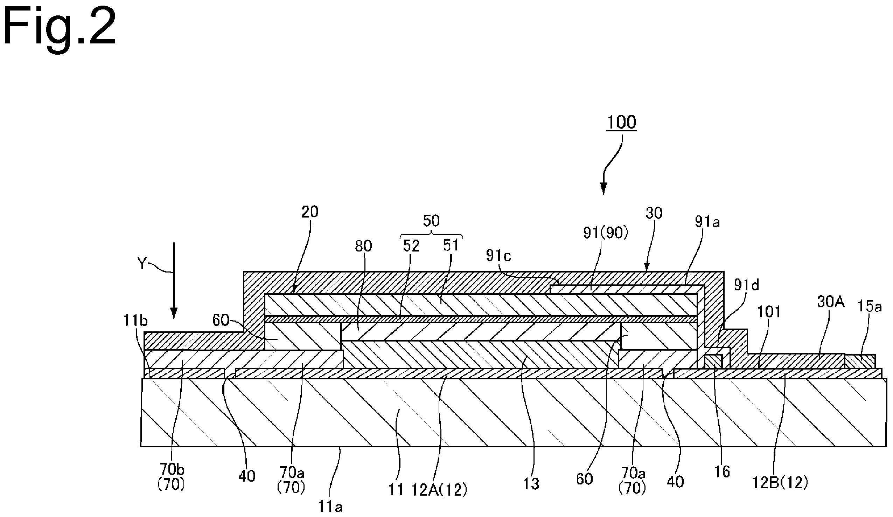

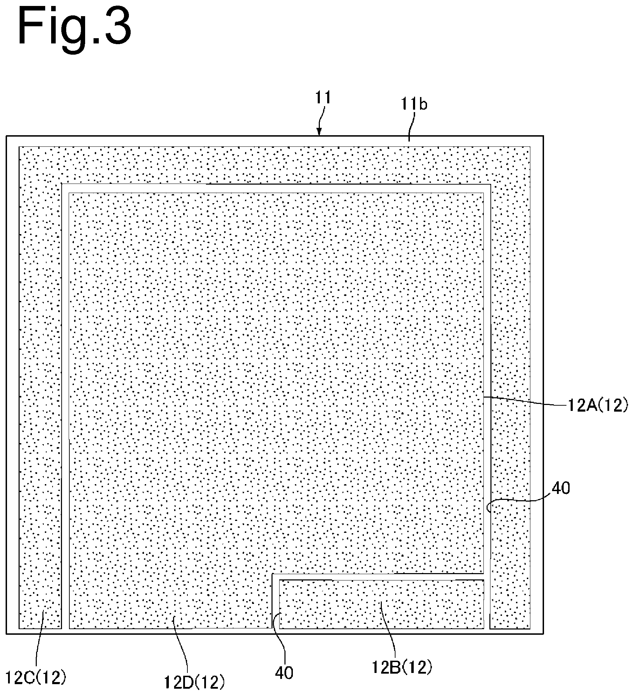

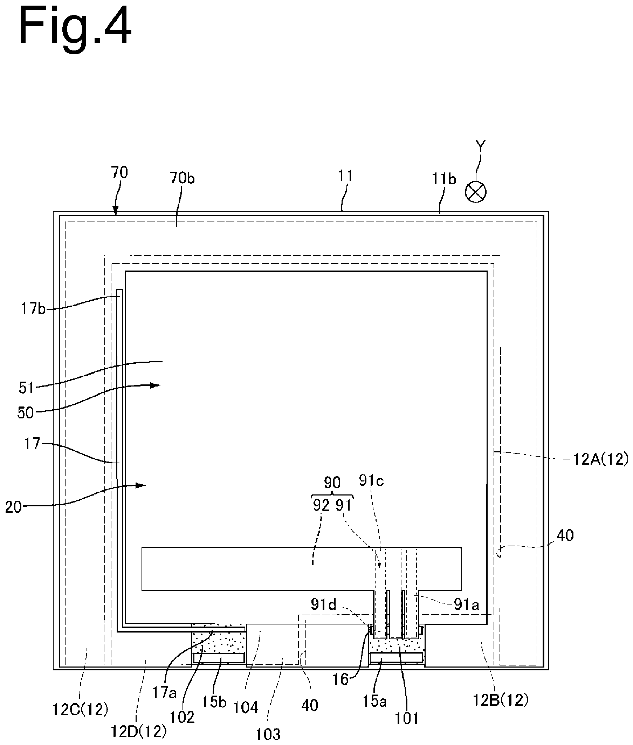

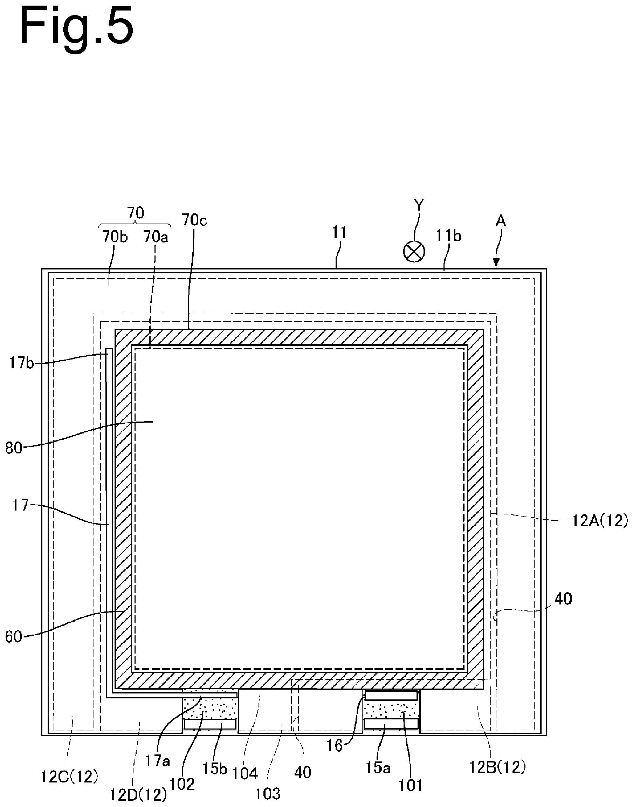

Hereinafter, the first embodiment of the photoelectric conversion element of the present invention is described in detail with reference to Figs. 1-5. Fig. 1 is a plan view showing the first embodiment of a photoelectric conversion element of the present invention; Fig 2 is a cut surface end view taken along line II-II in Fig. 1; Fig. 3 is a plan view showing a pattern of a transparent conductive layer in the photoelectric conversion element of Fig.1; Fig. 4 is a plan view showing the photoelectric conversion element excluding a protective layer; and Fig. 5 is a cross-sectional view showing a state where the photoelectric conversion element shown in Fig. 4 excluding the protective layer is cut with a plane crossing the sealing portion.

As shown in Figs. 1 and 2, a photoelectric conversion element 100 includes a transparent substrate 11 having a light receiving surface 11a, one photoelectric conversion cell 20 provided on one surface 11b (hereinafter referred to as "cell installation surface") of the transparent substrate 11 on the opposite side to the light receiving surface 11a and a protective layer 30 which is provided on the side facing the cell installation surface 11b of the transparent substrate 11 and which covers and protects the photoelectric conversion cell 20. The protective layer 30 is constituted by a resin layer containing a resin material. That is, the protective layer 30 includes the resin layer on the side facing the transparent substrate 11.

As shown in Fig.3, a transparent conductive layer 12 is provided on the cell installation surface 11b of the transparent substrate 11. The transparent conductive layer 12 includes an electrode 12A, a conductive first current extracting portion 12B for extracting a current from the photoelectric conversion cell 20, a conductive second current extracting portion 12D for extracting a current from the photoelectric conversion cell 20, a separating part 12C provided to surround the electrode 12A, the first extracting portion 12B and the second extracting portion 12D. The electrode 12A, the first current extracting portion 12B and the separating part 12C are disposed via a groove 40 with a state insulated from each other. The electrode 12A and the second current extracting portion 12D are connected to each other. The separating part 12C, the first current extracting portion 12B and the second current extracting portion 12D are disposed via the groove 40 in a state insulated from each other. The first current extracting portion 12B and the second current extracting portion 12D are also disposed to be adjacent via the groove 40 in a state insulated from each other.

As shown in Fig. 2, the photoelectric conversion cell 20 includes an electrode 12A provided on the cell installation surface 11b of the transparent substrate 11, a counter substrate 50 facing the electrode 12A, a ring-shaped sealing portion 60 provided between the transparent substrate 11 and the counter substrate 50, an oxide semiconductor layer 13 provided on the electrode 12A, an insulating layer 70 provided at least between the sealing portion 60 and the electrode 12A and composed of an insulating material, and an electrolyte 80 disposed between the electrode 12A and the counter substrate 50.

As shown in Fig. 2 and Fig.5, a first external connecting terminal 15a is provided on the first current extracting portion 12B, and a connecting terminal 16 is provided between the first external connecting terminal 15a and the sealing portion 60 on the first current extracting portion 12B and in a state separated from the first external connecting terminal 15a. On the other hand, as shown in Fig.5, a second external connecting terminal 15b is provided on the second current extracting portion 12D. A current collecting wiring having a resistance lower than that of the electrode 12A and the second current extracting portion 12D is provided so as to straddle the second current extracting portion 12D and the electrode 12A. One end of the current collecting wiring 17 (hereinafter referred to as a "first current collecting wiring end") is connected to a position separated from the second external connecting terminal 15b between the second external connecting terminal 15b and the sealing portion 60 on the second current extracting portion 12D, and the other end 17b of the current collecting wiring 17 (hereinafter referred to as "second current collecting wiring end") is connected to a position outside the sealing portion 60 and on the electrode 12A.

As shown in Fig. 2, the counter substrate 50 includes a metal substrate 51 serving as a substrate and an electrode, and a catalyst layer 52 which is provided on the side facing the electrode 12A of the metal substrate 51 and contributes to reduction of the electrolyte 80.

As shown in Fig.2 and Fig.4, the photoelectric conversion element 100 includes a conductive member 90 containing at least one (three in Fig.4) wiring part 91. The wiring part 91 connects the metal substrate 51 and the connecting portion 16 provided on the side of the cell installation surface 11b of the transparent substrate 11 and outside the sealing portion 60. In other words, one end 91c of the wiring part 91 is connected to the metal substrate 51 of the photoelectric conversion cell 20 and the other end 91d of the wiring part 91 is connected to the connecting terminal 16 outside the sealing portion 60. The conductive member 90 further includes a body part 92 intersecting the wiring part 91 on the metal substrate 51.

As shown in Fig. 5, the insulating layer 70 includes an inner insulating layer 70a which is on the side inner than the outer peripheral edge 70c of the sealing portion 60, and an outer insulating layer 70b on the side outer than the outer peripheral edge 70c of the sealing portion 60 when the photoelectric conversion element 100 is viewed in a direction Y orthogonal to the cell installation surface 11b of the transparent substrate 11. The inner insulating layer 70a is provided so as to be in contact with the oxide semiconductor layer 13. That is, the inner insulating layer 70a covers the entire region excluding a region where the oxide semiconductor layer 13 is provided of the electrode 12A as well as the groove 40 on the side inner than the outer peripheral edge 70c of the sealing portion 60 in order to suppress intrusion of moisture into the photoelectric conversion cell 20 from the groove 40. In addition, the inner insulating layer 70a enters the groove 40 at a portion overlapping with the groove 40 in order to suppress intrusion of moisture into the photoelectric conversion cell 20 from the groove 40. The outer insulating layer 70b is provided to cover and hide a region of the transparent conductive layers 12 excluding a Connecting Terminal-External Connecting Terminal region 101 between the first external connecting terminal 15a and the connecting terminal 16 as well as a Wiring-External Connecting Terminal region 102 between the second external connecting terminal 15b and the first current collecting wiring end 17a. An Inter-External Connecting Terminal region 103 between the first external connecting terminal 15a and the second external connecting terminal 15b of the region outside the sealing portion 60 and on the cell installation surface 11b of the transparent substrate 11 is covered and hidden with the outer insulating layer 70b of the insulating layer 70. Moreover, a wire-connecting terminal region 104 between the connecting terminal 16 and the first current collecting wiring end 17a of the region outside the sealing portion 60 and on the cell installation surface 11b of the transparent substrate 11 is also covered and hidden with the outer insulating layer 70b of the insulating layer 70.

As shown in Fig. 1, the protective layer 30 covers the photoelectric conversion cell 20 as well as the region excluding the first external connecting terminal 15a and the second external connecting terminal 15b of the region on the transparent substrate 11. That is, the protective layer 30 covers and hides the outer insulating layer 70b of the insulating layer 70, the Connecting Terminal-External Connecting Terminal region 101, the Wiring-External Connecting Terminal region 102, the Inter-External Connecting Terminal region 103 and the wiring-connecting terminal region 104. Further, the protective layer 30 covers the main surface 91a of the wiring part 91 of the conductive member 90 on the side facing away from the transparent substrate 11 and is fixed at the metal substrate 51 of the photoelectric conversion cell 20. In a case where the photoelectric conversion element 100 is viewed in the direction Y orthogonal to the cell installation surface 11b, the peripheral edge part 30A of the protective layer 30 extends to the Connecting Terminal-External Connecting Terminal region 101 beyond the connecting terminal 16 and the resin layer of the peripheral edge part 30A of the protective layer 30 is directly adhered to the Connecting Terminal-External Connecting Terminal region 101. That is, a glass material such as a glass layer is not directly adhered to the Connecting Terminal-External Connecting Terminal region 101. Further, in a case where the photoelectric conversion element 100 is viewed in a direction orthogonal to the cell installation surface 11b of the transparent substrate 11, the peripheral edge part 30A of the protective layer 30 extends to the Wiring-External Connecting Terminal region 102 beyond the first current collecting wiring end 17a and is directly adhered to the Wiring-External Connecting Terminal region 102 of the peripheral edge part 30A of the protective layer 30. That is, a glass material such as a glass layer is not directly adhered to the Wiring-External Connecting Terminal region 102. Further, the protective layer 30 has a linear expansion coefficient smaller than a linear expansion coefficient of the sealing portion 60.

According to the photoelectric conversion element 100, the first external connecting terminal 15a and the connecting terminal 16 are separated from each other. For this reason, when a lead wire (not shown) is connected to the first external connecting terminal 15a of the photoelectric conversion element 100 by soldering, heat is less likely to transfer from the first external connecting terminal 15a to the connecting terminal 16 and is finally less likely to transfer to the conductive member 90, and thus problems such as disconnection or resistance increase is less likely to occur in the conductive member 90. For this reason, the photoelectric conversion element 100 can manufacture a photoelectric conversion element with a lead wire with high yield.

Further, in the photoelectric conversion element 100, in a case where the photoelectric conversion element 100 is viewed in the direction Y orthogonal to the cell installation surface 11b of the transparent substrate 11, the protective layer 30 covers and protects the photoelectric conversion cell 20, the peripheral edge part 30A of the protective layer 30 extends to the Connecting Terminal-External Connecting Terminal region 101 beyond the connecting terminal 16 and the resin layer of the peripheral edge part 30A of the protective layer 30 is directly adhered to the Connecting Terminal-External Connecting Terminal region 101. That is, a glass material such as a glass layer is not directly adhered to the Connecting Terminal-External Connecting Terminal region 101. For this reason, the photoelectric conversion element 100 can have excellent photoelectric conversion characteristic compared to a case where the glass material such as the glass layer is directly adhered to the Connecting Terminal-External Connecting Terminal region 101.

Further, in the photoelectric conversion element 100, when the sealing portion 60 expands and contracts in the direction Y orthogonal to the cell installation surface 11b of the transparent substrate 11 in accordance with an ambient temperature change, in particular, a repetitive stress is easily applied to the main surface 91a of the wiring part 91 of the conductive member 90 on the side facing away from the transparent substrate 11. In contrast, in the photoelectric conversion element 100, the protective layer 30 covers at least the main surface 91a of the wiring part 91 on the side facing away from the transparent substrate 11 and this protective layer 30 has a linear expansion coefficient smaller than a linear expansion coefficient of the sealing portion 60. For this reason, the protective layer 30 is less likely to expand and contract than the sealing portion 60. In addition, in a case where the photoelectric conversion element 100 is viewed in the direction Y orthogonal to the cell installation surface 11b of the transparent substrate 11, the protective layer 30 covers the photoelectric conversion cell 20 and is fixed at the metal substrate 51 of the photoelectric conversion cell 20. In addition, the peripheral edge part 30A of the protective layer 30 extends to the Connecting Terminal-External Connecting Terminal region 101 beyond the connecting terminal 16. In other words, when the photoelectric conversion element 100 is viewed in the direction Y orthogonal to the cell installation surface 11b of the transparent substrate 11, the protective layer 30 is fixed at the inside and outside of the sealing portion 60 where the variation in the direction Y orthogonal to the cell installation surface 11b of the transparent substrate 11 is the most likely to occur in accordance with the temperature change. In other words, in a case where the photoelectric conversion element 100 is viewed in the direction Y orthogonal to the cell installation surface 11b of the transparent substrate 11, the protective layer 30 is fixed at a part where the variation in the direction Y orthogonal to the cell installation surface 11b of the transparent substrate 11 in accordance with the temperature change is less likely to occur compared with the sealing portion 60. For this reason, even if the sealing portion 60 expands and contracts in the direction Y orthogonal to the cell installation surface 11b of the transparent substrate 11 and a repetitive stress is applied to at least the main surface 91a of the wiring part 91 on the side facing away from the transparent substrate 11, the stress is sufficiently relaxed by the protective layer 30. For this reason, the occurrence of cracks in at least the main surface 91a of the wiring part 91 on the side facing away from the transparent substrate 11 is sufficiently suppressed. Therefore, the photoelectric conversion element 100 can have excellent durability even when used under an environment having a large temperature change.

Further, in the photoelectric conversion element 100, the second external connecting terminal 15b and the current collecting wiring end 17a are separated from each other. For this reason, when a lead wire (not shown) is connected to the second external connecting terminal 15b of the photoelectric conversion element 100 by soldering, heat is less likely to transfer from the second external connecting terminal 15b to the first current collecting wiring end 17a and is finally less likely to transfer to the current collecting wiring 17, and thus problems such as disconnection or resistance increase is less likely to occur in the current collecting wiring 17. For this reason, the photoelectric conversion element 100 can manufacture a photoelectric conversion element with a lead wire with higher yield. Further, in a case where the photoelectric conversion element 100 is viewed in the direction Y orthogonal to the cell installation surface 11b of the transparent substrate 11, the peripheral edge part 30A of the protective layer 30 extends to the Wiring-External Connecting Terminal region 102 beyond the first current collecting wiring end 17a and the resin layer of the peripheral edge part 30A of the protective layer 30 is directly adhered to the Wiring-External Connecting Terminal region 102. That is, a glass material such as a glass layer is not directly adhered to the Wiring-External Connecting Terminal region 102. For this reason, the photoelectric conversion element 100 can have more excellent photoelectric conversion characteristic compared to a case where the glass layer is directly adhered to the Wiring-External Connecting Terminal region 102.

Next, the transparent substrate 11, the transparent conductive layer 12, the oxide semiconductor layer 13, the first external connecting terminal 15a, the second external connecting terminal 15b, the connecting terminal 16, the current collecting wiring 17, dyes, the protective layer 30, the counter substrate 50, the sealing portion 60, the insulating layer 70, the electrolyte 80 and the conductive member 90 are described in detail.

<Transparent substrate>

The material constituting the transparent substrate 11 may be any transparent material, for example, and examples of such a transparent material include glass such as borosilicate glass, soda lime glass, glass which is composed of soda lime and whose iron component is less than that of ordinary soda lime glass, and quartz glass; polyethylene terephthalate (PET), polyethylene naphthalate (PEN), polycarbonate (PC), and polyethersulfone (PES). The thickness of the transparent substrate 11 is appropriately determined depending on the size of the photoelectric conversion element 100 and is not particularly limited, but it may be set to the range of from 0.05 mm to 10 mm, for example.

<Transparent conductive layer>

Examples of the material contained in the transparent conductive layer 12 include a conductive metal oxide such as tin-doped indium oxide (ITO), tin oxide ($SnO_2$), and fluorine-doped tin oxide (FTO). The transparent conductive layer 12 may be constituted by a single layer or a laminate consisting of a plurality of layers containing different conductive metal oxides. It is preferable that the transparent conductive layer 12 contain FTO since FTO exhibits high heat resistance and chemical resistance in a case in which the transparent conductive layer 12 is constituted by a single layer. The transparent conductive layer may further include glass frit. The thickness of the transparent conductive layer 12 may be set to the range of from 0.01 to 2 $\mu$m, for example.

<Oxide semiconductor layer>

The oxide semiconductor layer 13 is composed of oxide semiconductor particles. The oxide semiconductor particles are composed of, for example, titanium oxide ($TiO_2$), silicone oxide ($SiO_2$), zinc oxide (ZnO), tungsten oxide ($WO_3$), niobium oxide ($Nb_2O_5$), strontium titanate ($SrTiO_3$), tin oxide ($SnO_2$), indium oxide ($In_3O_3$), zirconium oxide ($ZrO_2$), thallium oxide ($Ta_2O_5$), lanthanum oxide ($La_2O_3$), yttrium oxide ($Y_2O_3$), holmium oxide ($Ho_2O_3$), bismuth oxide ($Bi_2O_3$), cerium oxide ($CeO_2$), aluminum oxide ($Al_2O_3$), or two or more kinds of these.
The oxide semiconductor layer 13 is typically composed of an absorbing layer for absorbing light but may be composed of the absorbing layer and a reflective layer which returns the light transmitted through the absorbing layer to the absorbing layer by reflecting the light.
The thickness of the oxide semiconductor layer 13 is not particularly limited, but may be typically set to from 0.5 to 50 $\mu$m.

<First external connecting terminal and second external connecting terminal>

The first external connecting terminal 15a and the second external connecting terminal 15b include metal materials. Examples of the metal materials include silver, copper, and indium. They may be used singly or in a combination of two or more thereof. The first external connecting terminal 15a and the second external connecting terminal 15b are composed of, for example, a fired body composed of only a metal material.

<Connecting terminal>

The connecting terminal 16 includes a metal material. The connecting terminal 16 may be composed of the same material as or different material from that of the first external connecting terminal 15a and the second external connecting terminal 15b, but it is preferably composed of the same material.

<Current collecting wiring>

The current collecting wiring 17 includes a metal material. The current collecting wiring 17 may be composed of the same material as or different material from that of the first external connecting terminal 15a and the second external connecting terminal 15b, but it is preferably composed of the same material.

<Dye>

As the dye, for example, a photosensitizing dye such as a ruthenium complex having a ligand including a bipyridine structure, a terpyridine structure, an organic dye such as porphyrin, eosin, rhodamine or merocyanine; and an organic-inorganic composite dye such as a halogenated lead-based perovskite crystal may be exemplified. As the halogenated lead-based perovskite, for example, $CH_3NH_3PbX_3$ (X = Cl, Br, I) is used. Herein, in a case where a photosensitizing dye is used as the dye, the photoelectric conversion element 100 is a dye-sensitized photoelectric conversion element and the photoelectric conversion cell 20 is a dye-sensitized photoelectric conversion cell.
Among the dyes, the ruthenium complex having a ligand including a bipyridine structure or a terpyridine structure is preferred. In this case, it is possible to more improve the photoelectric conversion characteristic of the photoelectric conversion element 100.

<Protective layer>

The linear expansion coefficient of the protective layer 30 is not particularly limited as long as the linear expansion coefficient is smaller than the linear expansion coefficient of the sealing portion 60. That is, it is acceptable that a ratio (A1/A2) of the linear expansion coefficient A1 of the protective layer 30 to the linear expansion coefficient A2 of the sealing portion 60 is less than one. However, A1/A2 is preferably 0.5 or less, and more preferably 0.35 or less. In this case, even if the sealing portion 60 expands and contracts and a repetitive stress is applied to at least the main surface 91a on the side facing away from the transparent substrate 11 of the wiring part 91, the stress is sufficiently relaxed by the protective layer 30. For this reason, the occurrence of cracks in at least the main surface 91a on the side facing away from the transparent substrate 11 of the wiring part 91 is sufficiently suppressed. Therefore, the photoelectric conversion element 100 can have more excellent durability even when used under an environment having a large temperature change. However, A1/A2 is preferably 0.15 or more, and is more preferably 0.20 or more. In this case, the occurrence of cracks under an environment having a large temperature change is more sufficiently suppressed.

The linear expansion coefficient of the protective layer 30 is not particularly limited, but is typically 150 ppm/°C or less, preferably 100 ppm/°C or less, more preferably 80 ppm or less, and particularly preferably 60 ppm/°C or less. In this case, even if the sealing portion 60 expands and contracts and a repetitive stress is applied to at least the main surface 91a on the side facing away from the transparent substrate 11 of the wiring part 91, the stress is more sufficiently relaxed by the protective layer 30. Therefore, the occurrence of cracks in at least the main surface 91a on the side facing away from the transparent substrate 11 of the wiring part 91 is sufficiently suppressed. Therefore, the photoelectric conversion element 100 can have more excellent durability even when used under an environment having a large temperature change. However, the linear expansion coefficient of the protective layer 30 is 25 ppm/°C or more and more preferably 30 ppm or more. In this case, the occurrence of cracks in the protective layer 30 under an environment having a large temperature change is more sufficiently suppressed.

The resin material contained in the resin layer of the protective layer 30 is not particularly limited as long as it has insulating property. Examples of the resin material include a polyimide resin, an epoxy resin, a polyurethane resin, an acrylurethane resin and polyethylene terephthalate (PET) resin. Among them, the polyimide resin is preferable. In this case, concealing property to a region under the protective layer 30 is excellent, and more excellent insulating property can be imparted to the protective layer 30.

The protective layer 30 includes the resin layer composed of the resin material (insulating material) on the side facing the transparent substrate 11. Accordingly, the protective layer 30 may be constituted by only one resin layer composed of the resin material or may be constituted by a laminate of the plurality of resin layers composed of the resin material. Further, the protective layer 30 may further include a metal layer on the side of the resin layer facing away from the transparent substrate 11.

The color of the protective layer 30 is not particularly limited but at least the resin layer on the side facing the transparent substrate 11 is preferably black. In this case, when at least the resin layer on the side facing the transparent substrate 11 is black, the photoelectric conversion element 100 is less likely to be degraded even if ultraviolet ray is irradiated from the protective layer 30 side, or heat generated in the photoelectric conversion cell 20 due to a large heat radiation is easily released.

The thickness of the protective layer 30 is not particularly limited but is preferably 30 to 300 μm. In this case, heat resistance of the protective layer 30 becomes higher.

<Counter substrate>

The counter substrate 50 includes, as described above, the metal substrate 51 which serves as a substrate and an electrode, and the catalyst layer 52.

(Metal substrate)

The metal substrate 51 is composed of a metal, but the metal is preferably a metal capable of forming a passivation. In this case, since the metal substrate 51 is less likely to be corroded by the electrolyte 80, the photoelectric conversion element 100 can have more excellent durability. Examples of the metal capable of forming a passivation include, for example, titanium, nickel, molybdenum, tungsten, aluminum, stainless steel, and alloys thereof. The thickness of the metal substrate 51 is appropriately determined depending on the size of the photoelectric conversion element 100 and is not particularly limited, but is set to, for example, 0.005 mm to 0.1 mm.

(Catalyst layer)

The catalyst layer 52 is composed of platinum, a carbon-based material, a conductive polymer or the like. Herein, as the carbon-based material, carbon black or carbon nanotubes are preferably used.

<Sealing portion>

Examples of the material constituting the sealing portion 60 include a resin such as a modified polyolefin resin including an ionomer, an ethylene-vinyl acetate anhydride copolymer, an ethylene-methacrylic acid copolymer and an ethylene-vinyl alcohol copolymer; a ultraviolet curable resin; a vinyl alcohol polymer and the like. These can be used singly or in a combination of two or more kinds thereof.

The thickness of the sealing portion 60 is not particularly limited, but is typically 10 to 50 $\mu$m, and preferably 20 to 40 $\mu$m. In this case, intrusion of moisture into the inside of the sealing portion 60 can be sufficiently suppressed.

<Insulating layer>

The insulating layer 70 is composed of an insulating material. Examples of such an insulating material include a resin and an inorganic insulating material. Among them, an inorganic insulating material is preferable. In this case, since the insulating layer 70 covers the groove 40 as well as the entire region excluding a region where the oxide semiconductor layer 13 is provided of the electrode 12A inside the outer peripheral edge 70c of the sealing portion 60, and the inorganic material has a sealing ability higher than that of the resin, intrusion of moisture from the groove 40 is sufficiently suppressed. Examples of such an inorganic insulating material include glass

The insulating material constituting the insulating layer 70 is preferably colored. In this case, it is suppressed that the counter substrate 50 can be remarkably seen when the photoelectric conversion element 100 is viewed from the light receiving surface 11a side. Therefore, a good appearance can be realized. Further, since the electrode 12A does not have to be colored, it is possible to sufficiently suppress the lowering of the photoelectric conversion characteristic of the photoelectric conversion element 100. As the colored insulating material, for example, an inorganic insulating material such as colored glass can be used.

When the insulating layer 70 is colored, the color is not particularly limited. Various colors can be used depending on the purpose.

The thickness of the insulating layer 70 is not particularly limited, but is typically from 10 to 30 $\mu$m, and preferably from 15 to 25 $\mu$m.

<Electrolyte>

The electrolyte 80 contains a redox pair and an organic solvent. It is possible to use acetonitrile, methoxy acetonitrile, methoxy propionitrile, propionitrile, ethylene carbonate, propylene carbonate, diethyl carbonate, $\gamma$-butyrolactone, valeronitrile or pivalonitrile as the organic solvent. Examples of the redox pair include a redox couple such as bromide ion (bromine ion)/polybromide ion, a zinc complex, an iron complex, and a cobalt complex in addition to iodide ion/polyiodide ion (for example, $I^-/I_3^-$). In addition, iodine ion/polyiodide ion can be formed by iodine ($I_2$) and a salt (an ionic liquid or a solid salt) containing iodide ($I^-$) as an anion. In a case of using the ionic liquid having iodide as an anion, only iodide may be added. In a case of using an organic solvent or an ionic liquid other than iodide as an anion, a salt containing iodide ($I^-$) as an anion such as LiI, tetrabutylammonium iodide or the like may be added.

In addition, the electrolyte 80 may use an ionic liquid instead of the organic solvent. As the ionic liquid, for example, an ordinary temperature molten salt which is a known iodine salt, such as a pyridinium salt, an imidazolium salt, or a triazolium salt, and which is in a molten state at around room temperature is used. As such an ordinary temperature molten salt, for example, 1-hexyl-3-methylimidazolium iodide, 1-ethyl-3-propylimidazolium iodide, dimethylimidazolium iodide, ethylmethylimidazolium iodide, dimethylpropylimidazolium iodide, butylmethylimidazolium iodide, or methylpropylimidazolium iodide is preferably used.

In addition, the electrolyte 80 may use a mixture of the above ionic liquid and the above organic solvent instead of the above organic solvent.

In addition, it is possible to add an additive to the electrolyte 80. Examples of the additive include LiI, $I_2$, 4-t-butylpyridine, guanidium thiocyanate, 1-methylbenzimidazole, and 1-butylbenzimidazole.

Moreover, as the electrolyte 80, a nanocomposite gel electrolyte which is a quasi-solid electrolyte obtained by kneading nanoparticles such as $SiO_2$, $TiO_2$, and carbon nanotubes with the above electrolyte to form a gel-like form may be used, or an electrolyte gelled using an organic gelling agent such as polyvinylidene fluoride, a polyethylene oxide derivative, or an amino acid derivative may also be used.

In addition, the electrolyte 80 contains a redox couple including iodide ions/polyiodide ions (for example, $I^-/I_3^-$), and a concentration of the polyiodide ions is preferably 0.006 mol/L or less. In this case, since the concentration of polyiodide ions carrying electrons is low, leakage current can be further reduced. For this reason, since an open circuit voltage can be further increased, the photoelectric conversion characteristics can be further improved. Particularly, the concentration of the polyiodide ions is preferably 0.005 mol/liter or less, more preferably in a range of 0 to $6 \times 10^{-6}$ mol/liter, even more preferably in a range of 0 to $6 \times 10^{-8}$ mol/liter. In this case, in a case where the photoelectric conversion element 100 is viewed from the light receiving surface 11a side of the transparent substrate 11, it is possible to make the color of the electrolyte 80 visually less noticeable.

<Conductive member>

The conductive member 90 has the wiring part 91 and the body part 92, as described above. The conductive member 90 includes a metal material. As the metal material, for example, silver or copper can be used. The conductive member 90 may further include a binder resin in addition to the metal material. Examples of the binder resin include an epoxy resin, a polyester resin, and acrylic resin. Among these, the epoxy resin or the polyester resin is preferable since thermal expansion is less likely to occur even at a high temperature and the temporal change of the resistance can be made smaller.

Part of the wiring part 91 of the conductive member 90 and the body part 92 may be constituted by a laminate including a first layer provided on the metal substrate 51 and a second layer directly connected to the first layer. In this case, it is preferable that the first layer include the metal material, the binder resin and carbon, the second layer include the metal material and the binder resin and the content rate of carbon in the first layer be larger than the content rate of carbon in the second layer. In this case, the conductive member 90 is less likely to be peeled from the metal substrate 51.

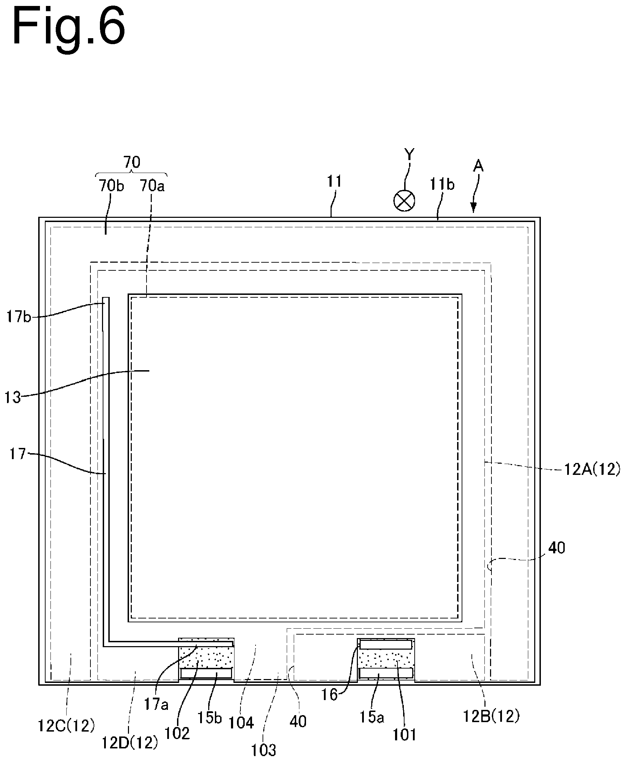

Next, a method of manufacturing the photoelectric conversion element 100 will be described with reference to Figs. 1 and 3 to 6. Fig. 6 is a cross-sectional view showing a structure obtained in the middle of the manufacturing method of the photoelectric conversion element of Fig.1.

First, a laminate obtained by forming a transparent conductive film on the cell installation surface 11b of one transparent substrate 11 is prepared.

As the method of forming the transparent conductive film 12, a sputtering method, a vapor deposition method, a spray pyrolysis deposition method, a CVD method or the like is used.

Next, as shown in Fig. 3, the groove 40 is formed in the transparent conductive film to form the transparent conductive layer 12. At this time, the transparent conductive layer 12 is formed so that the electrode 12A, the first current extracting portion 12B the separating part 12C and the second current extracting portion 12D are formed.

The groove 40 can be formed by a laser scribing method using a YAG laser or a $CO_2$ laser as a light source, for example.

Next, a precursor of the first external connecting terminal 15a and a precursor of the connecting terminal 16 are formed on the first current extracting portion 12B to be separated from each other. The precursor of the first external connecting terminal 15a and the precursor of the connecting terminal 16 can be formed by applying and drying a silver paste, for example.

A precursor of the second external connecting terminal 15b is formed on the second current extracting portion 12D. The precursor of the second external connecting terminal 15b can be formed by applying and drying a silver paste, for example.

Further, a precursor of the current collecting wiring 17 is formed so as to straddle the electrode 12A and the second current extracting portion 12D. At this time, the precursor of the current collecting wiring 17 is formed so that the one end is disposed at a position separated from the precursor of the second external connecting terminal 15b on the second current extracting portion 12D and the other end is disposed at a position on the electrode 12A. The precursor of the current collecting wiring 17 can be formed by applying and drying a silver paste, for example.

Further, a precursor of the insulating layer 70 is formed to hide and cover a region excluding a region scheduled to form the oxide semiconductor layer 13 (hereinafter referred to as "semiconductor layer formation scheduled region"), the connecting terminal-external connecting terminal region 101 and the Wiring-External Connecting Terminal region 102 of the transparent conductive layer 12. At this time, the precursor of the insulating layer 70 is formed to enter the groove 40. The precursor of the insulating layer 70 can be formed by applying and drying a paste containing an inorganic insulating material, for example.

Next, the precursor of the first external connecting terminal 15a, the precursor of the second external connecting terminal 15b, the precursor of the connecting terminal 16, the precursor of the current collecting wiring 17 and the precursor of the insulating layer 70 are collectively fired to form the first external connecting terminal 15a, the second external connecting terminal 15b, the connecting terminal 16, the current collecting wiring 17 and the insulating layer 70.

At this time, the firing temperature varies depending on the kind of the insulating material, but is typically 350 to 600°C. The firing time also varies depending on the kind of the insulating material but is typically 1 to 5 hours.

Next, a precursor of the oxide semiconductor layer 13 is formed on the semiconductor layer formation scheduled region of the electrode 12A.

The precursor of the oxide semiconductor layer 13 is obtained by printing a paste for oxide semiconductor layer for forming the oxide semiconductor layer 13 and drying the paste. The paste for oxide semiconductor layer includes a resin such as polyethylene glycol or ethyl cellulose, and a solvent such as terpineol in addition to titanium oxide.

It is possible to use, for example, a screen printing method, a doctor blading method, or a bar coating method as the printing method of the paste for oxide semiconductor layer.

Next, the precursor of the oxide semiconductor layer 13 is fired to form the oxide semiconductor layer 13.

At this time, the firing temperature varies depending on the kind of the oxide semiconductor particles, but is typically 350-600°C. The firing time also varies depending on the kind of the oxide semiconductor particles but is typically 1 to 5 hours.

Thus, as shown in Fig. 6, a structure A is obtained.

Next, a sealing portion forming body for forming the sealing portion 60 is prepared. The sealing portion forming body can be obtained by preparing one sheet of a resin film for sealing composed of the material constituting the sealing portion 60 and forming an opening in the resin film for sealing, for example.

Then, as shown in Fig.5, the sealing portion forming body is adhered onto the structure A. At this time, the sealing portion forming body is adhered to the structure A so that it overlaps with the insulating layer 70 and is disposed on the inside of the sealing portion forming body. Adhesion of the sealing portion forming body to the structure A can be conducted by heating and melting the sealing portion forming body, for example.

Next, a dye is supported on the oxide semiconductor layer 13 of the structure A. For this purpose, for example, the structure A is immersed in a dye solution containing a dye to make the dye adsorb on the oxide semiconductor layer 13 and then the excess dye is washed away with the solvent component of the above solution and is dried.

Next, the electrolyte 80 is disposed on the oxide semiconductor layer 13.

On the other hand, the counter substrate 50 is prepared. The counter substrate 50 can be obtained by forming the conductive catalyst layer 52 on the metal substrate 51, for example.

Next, another sealing portion forming body described above is prepared. Then, the counter substrate 50 is stuck so as to close the opening of the sealing portion forming body.

Next, the sealing portion forming body adhered to the counter substrate 50 and the sealing portion forming body adhered to the structure A where the electrolyte 80 is disposed are overlapped, and then heated and melted while the sealing portion forming bodies are pressurized. Thus, the sealing portion 60 is formed between the transparent substrate 11 of the structure A and the counter electrode 50. Formation of the sealing portion 60 may be conducted under atmospheric pressure or under reduced pressure but is preferably conducted under reduced pressure.

Then, as shown in Fig.4, the connecting terminal 16 and the metal substrate 51 of the counter substrate 50 are connected by the conductive member 90. At this time, for the conductive member 90, a paste containing a metal material constituting the conductive member 90 is prepared and the paste is applied and cured to connect the metal substrate 51 of the counter substrate 50 and the connecting terminal 16. As the above paste, a low-temperature curing type paste capable of being cured at a temperature of 90°C or less is preferably used in terms of avoiding adverse effects on the dye supported on the oxide semiconductor layer 13.

Finally, the protective layer 30 is formed. The protective layer 30 is formed so that the protective layer 30 covers the photoelectric conversion cell 20 as well as the region excluding the first external connecting terminal 15a and the second external connecting terminal 15b of the region on the transparent substrate 11. That is, the protective layer 30 is formed so that the protective layer 30 covers and hides the photoelectric conversion cell 20 as well as the outer insulating layer 70b of the insulating layer 70, the Connecting Terminal-External Connecting Terminal region 101, the Wiring-External Connecting Terminal region 102, the Inter-External Connecting Terminal region 103 and the wiring-connecting terminal region 104. Further, at this time, the protective layer 30 is formed so that it covers the main surface 91a of the wiring part 91 of the conductive member 90 on the side facing away from the transparent substrate 11 and is fixed at the metal substrate 51.

In the above-mentioned manner, the photoelectric conversion element 100 is obtained (see Fig.1).

<<Second embodiment>>

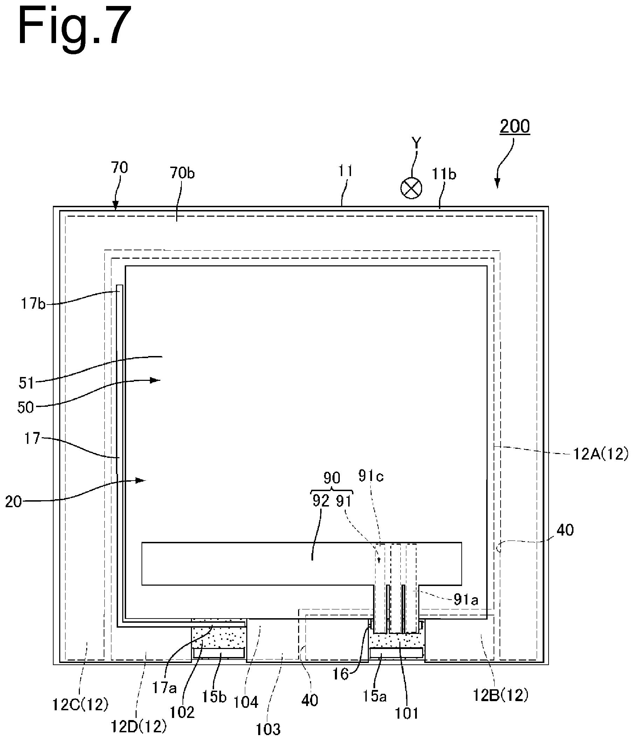

Next, the second embodiment of the photoelectric conversion element of the present invention is described in detail with reference to Fig. 7. Fig. 7 is a plan view showing the second embodiment of the photoelectric conversion element of the present invention.

As shown in Fig.7, a photoelectric conversion element 200 of the present embodiment is different from the photoelectric conversion element 100 of the first embodiment in that it includes no protective layer 30 and the Connecting Terminal-External Connecting Terminal region 101 and the Wiring-External Connecting Terminal 102 are exposed.

According to this photoelectric conversion element 200, the first external connecting terminal 15a and the connecting terminal 16 are separated from each other. For this reason, when a lead wire is connected to the first external connecting terminal 15a of the photoelectric conversion element 100 by soldering, heat is less likely to transfer from the first external connecting terminal 15a to the connecting terminal 16 and is finally less likely to transfer to the conductive member 90, and thus problems such as disconnection or resistance increase is less likely to occur in the conductive member 90. For this reason, the photoelectric conversion element 200 can manufacture a photoelectric conversion element with a lead wire with high yield. Further, in the photoelectric conversion element 200, the Connecting Terminal-External Connecting Terminal region 101 is exposed and nothing is adhered to the Connecting Terminal-External Connecting Terminal region 101. That is, a glass material such as a glass layer is not directly adhered to the Connecting Terminal-External Connecting Terminal region 101. For this reason, the photoelectric conversion element 200 can have excellent photoelectric conversion characteristic compared to a case where the glass layer is directly adhered to the Connecting Terminal-External Connecting Terminal region 101.

Further, in the photoelectric conversion element 200, the Wiring-External Connecting Terminal region 102 is exposed. For this reason, the second external connecting terminal 15b and the first current collecting wiring end 17a are separated from each other. For this reason, when a lead wire is connected to the second external connecting terminal 15b of the photoelectric conversion element 200 by soldering, heat is less likely to transfer from the second external connecting terminal 15b to the first current collecting wiring end 17a and is finally less likely to transfer to the current collecting wiring 17, and thus problems such as disconnection or resistance increase is less likely to occur in the current collecting wiring 17. For this reason, the photoelectric conversion element 200 can manufacture a photoelectric conversion element with a lead wire with higher yield. Further, the Wiring-External Connecting Terminal region 102 is exposed and nothing is adhered to the Wiring-External Connecting Terminal region 102. That is, a glass material such as a glass layer is not directly adhered to the Wiring-External Connecting Terminal region 102. For this reason, the photoelectric conversion element 200 can have excellent photoelectric conversion characteristic compared to a case where the glass layer is directly adhered to the Wiring-External Connecting Terminal region 102.

The present invention is not limited to the above-mentioned first and second embodiments. For example, in the first embodiment, the Connecting Terminal-External Connecting Terminal region 101 and the Wiring-External Connecting Terminal region 102 are covered and hidden with the protective layer 30 but in the first embodiment, it is acceptable that part of the Connecting Terminal-External Connecting Terminal region 101 and the Wiring-External Connecting Terminal region 102 is not covered with the protective layer 30 and is exposed. In other words, the peripheral edge part 30A of the protective layer 30 may be separated from the first external connecting terminal 15a and the second external connecting terminal 15b.

Further, in the first embodiment, the protective layer 30 is formed so that the protective layer 30 covers and hides the photoelectric conversion cell 20 as well as the outer insulating layer 70b of the insulating layer 70, the Connecting Terminal-External Connecting Terminal region 101, the Wiring-External Connecting Terminal region 102, the Inter-External Connecting Terminal region 103 and the wiring-connecting terminal region 104 but, in the first embodiment, it is sufficient that the protective layer 30 is only provided so that it covers the main surface 91a of the wiring part 91 of the conductive member 90 on the side facing away from the transparent substrate 11 and is fixed at the metal substrate 51, and in a case where the photoelectric conversion element 100 is viewed in the direction Y orthogonal to the cell installation surface 11b of the transparent substrate 11, the peripheral edge part 30A of the protective layer 30 is provided so as to extend to the Connecting Terminal-External Connecting Terminal region 101 beyond the connecting terminal 16.

Further, in the first embodiment, the protective layer 30 has the linear expansion coefficient smaller than the linear expansion coefficient of the sealing portion 60 but the protective layer 30 may have the linear expansion coefficient not less than that of the sealing portion 60.

In addition, in the second embodiment, the Wiring-External Connecting Terminal region 102 is exposed but the Wiring-External Connecting Terminal region 102 is not necessarily exposed and may be covered with the insulating layer 70.

Furthermore, in the first and second embodiments, the insulating layer 70 covers the entire region excluding the region where the oxide semiconductor layer 13 is provided of the electrode 12A on the inside of the outer peripheral edge of the sealing portion 60, but the insulating layer 70 may cover only part of the region excluding the region where the oxide semiconductor layer 13 is provided of the electrode 12A on the inside of the outer peripheral edge 70c of the sealing portion 60.

Moreover, in the first and second embodiments, the insulating layer 70 is constituted by the inner insulating layer 70a and the outer insulating layer 70b but the insulating layer 70 may be constituted by only the inner insulating layer 70a. Furthermore, in the above embodiments, the photoelectric conversion element 100 includes the insulating layer 70 but does not have to include the insulating layer 70.

Furthermore, in the first and second embodiments, the photoelectric conversion elements 100 and 200 include the current collecting wiring 17, but the photoelectric conversion element of the present invention does not necessarily include the current collecting wiring 17.

Furthermore, in the first and second embodiments, the separating part 12C is provided to surround the electrode 12A and the second current extracting portion 12D on the transparent substrate 11, but the separating part 12C may not be provided on the transparent substrate 11.

Further, in the first and second embodiments, only one photoelectric conversion cell 20 is provided on the transparent substrate 11, but, in the photoelectric conversion element 100, a plurality of photoelectric conversion cells 20 may be provided on the transparent substrate 11. In this case, the plurality of photoelectric conversion cells 20 may be connected in series or may be connected in parallel. When the plurality of photoelectric conversion cells 20 are connected in series, the first current extracting portion 12B is connected to the counter substrate 50 of the photoelectric conversion cell 20 on the one end side of the plurality of the photoelectric conversion cells 20 and the second current extracting portion 12D is connected to the electrode 12A of the photoelectric conversion cell 20 on the other end side. In addition, when the plurality of the photoelectric conversion cells 20 are connected in parallel, the first current extracting portion 12B is connected to the counter substrates 50 of all of the photoelectric conversion cells 20 of the plurality of the photoelectric conversion cells 20 by the conductive member 90 and the second current extracting portion 12D is connected to the electrodes 12A of all of the photoelectric conversion cells 20 of the plurality of the photoelectric conversion cells 20.

Examples

Hereinafter, the content of the present invention will be described more specifically with reference to examples, the present invention is not limited to the following examples.

(Example 1)

First, a laminate obtained by forming a transparent conductive film composed of FTO and having a thickness of 0.7 μm on the transparent substrate 11 which was composed of alkali-free glass, has a dimension of 112 mm × 56 mm and has a thickness of 2.2 mm was prepared. Next, as shown in Fig.3, the groove 40 was formed in the transparent conductive film by a YAG laser to form the transparent conductive layer 12. At this time, the transparent conductive layer 12 was formed so that the electrode 12A, the first current extracting portion 12B, the separating part 102C and the second current extracting portion 12D were formed. At this time, the width of the groove 40 was set to 0.1 mm. In addition, the electrode 12A was formed so as to have a quadrangular shape of 54.4 mm × 104.5 mm and the second current extracting portion 12D was formed to extend from one side of the electrode 12A and to have a quadrangular shape. The length in the extending direction of the second current extracting portion 12D was set to 4.3 mm and the width of the second current extracting portion 12D was set to 27.2 mm.

Further, the first current extracting portion 12B was formed to have a dimension of 27.2 mm × 4.3 mm.

Next, a precursor of the first external connecting terminal 15a and a precursor of the connecting terminal 16 were formed on the first current extracting portion 12B to have a rectangular shape and to be separated from each other. At this time, the precursor of the first external connecting terminal 15a was formed to have a dimension of 8 mm × 1.8 mm and the precursor of the connecting terminal 16 was formed to have a dimension of 8 mm × 0.3 mm.

Further, a precursor of the second external connecting terminal 15b was formed to have a rectangular shape on the second current extracting portion 12D. At this time, the precursor of the second external connecting terminal 15b was formed to have a dimension of 8 mm × 1.8 mm.

Further, the current collecting wiring 17 was formed so as to straddle the second current extracting portion 12D and the electrode 12A. At this time, the precursor of the current collecting wiring 17 was formed so that one end of the precursor of the current collecting wiring was disposed at a position separated from the precursor of the second external connecting terminal 15b on the second current extracting portion 12D and the other end of the precursor of the current collecting wiring 17 was disposed at a position on the electrode 12A. The precursor of the current collecting wiring 17 was formed to be L-shaped and to have a part with a dimension of 0.3 mm in width × 21.6 mm in length and a part with a dimension of 0.3 mm in width × 105.1 mm in length.

In addition, the precursor of the connecting terminal 16, the precursor of the first external connecting terminal 15a, the precursor of the second external connecting terminal 15b and the precursor of the current collecting wiring 17 were all formed by applying and drying a silver paste.

Next, a precursor of the insulating layer 70 was formed to cover and hide a region excluding the semiconductor layer formation scheduled region (region of 47.2 mm × 102.1 mm), the Connecting Terminal-External Connecting Terminal region 101 and the Wiring-External Connecting Terminal region 102 of the transparent conductive layer 12. At this time, the precursor of the insulating layer 70 was formed to enter the groove 40. The precursor of the insulating layer 70 was formed by applying and drying a paste containing glass frit (Product name "PLFOC-837B", manufactured by Okuno Chemical Industries Co., Ltd.).

Next, the precursor of the first external connecting terminal 15a, the precursor of the second external connecting terminal 15b, the precursor of the connecting terminal 16, the precursor of the current collecting wiring 17 and the precursor of the insulating layer 70 were collectively fired to form the first external connecting terminal 15a, the second external connecting terminal 15b, the connecting terminal 16, the current collecting wiring 17 and the insulating layer 70. At this time, the firing temperature was set to 500°C and the firing time was set to one hour. Further, at this time, the spacing L between the first external connecting terminal 15a and the connecting terminal 16 was 4.0 mm. Further, the spacing L' between the second external connecting terminal 15b and the first current collecting wiring end 17a was 4.0 mm.

Further, a precursor of the oxide semiconductor layer 13 was formed on the semiconductor layer formation scheduled region of the electrode 12A. At this time, the precursor of the oxide semiconductor layer 13 was obtained by applying a paste containing titanium oxide by screen printing to be filled inside the insulating layer 70 and drying the paste at 150°C for 10 minutes.

Next, the precursor of the oxide semiconductor layer 13 was fired to form the oxide semiconductor layer 13. At this time, the firing temperature was set to 500°C and the firing time was set to one hour. Thus, the structure A was obtained.

Next, a sealing portion forming body for forming a sealing portion was prepared. The sealing portion forming body was obtained by preparing one sheet of resin film for sealing which has a dimension of 51.2 mm × 106.1 mm × 35 μm and is composed of a maleic anhydride modified polyethylene (Product name "Bynel", manufactured by Du pont, linear expansion coefficient: 180 ppm/°C) and forming one rectangular opening of 102.10 mm × 47.20 mm in the resin film for sealing.

After the sealing portion forming body was superimposed on the structure A, the sealing portion forming body was adhered to the insulating layer 70 on the structure A by heating and melting the sealing portion forming body. At this time, the sealing portion forming body was adhered to the structure A so as to overlap with the insulating layer 70 and to be disposed between the oxide semiconductor layer 13 and the connecting terminal 16 or the current collecting wiring 17.

Next, the structure A obtained in the manner as described above was immersed for a whole day and night in a dye solution containing 0.2mM of a photosensitizing dye composed of Z907 and using a mixed solvent obtained by mixing acetonitrile and tert-butanol in a volume ratio of 1 : 1 as a solvent, and was then taken out and dried. Thus, the photosensitizing dye was supported on the oxide semiconductor layer.

Next, the electrolyte 80 obtained by adding $I_2$, methyl benzimidazole, butyl benzimidazole, guanidium thiocyanate and t-butyl pyridine to a mixture of dimethyl propyl imidazolium iodide and 3-methoxypropionitrile. Then, the above electrolyte 80 was dropped and applied, and then disposed on the oxide semiconductor layer 13.

Next, one sheet of counter substrate 50 was prepared. The counter substrate 50 was prepared by forming a catalyst layer which is composed of platinum and has a thickness of 5nm on a titanium foil of 51.2 mm × 106.1 mm × 40 μm by a sputtering method. In addition, another sealing portion forming body described above was prepared. Then, the counter substrate 50 was stuck so as to close the opening of the sealing portion forming body.

Then, the sealing portion forming body adhered to the counter substrate 50 and the sealing portion forming body adhered to the structure where the electrolyte 80 was disposed were superimposed on each other under reduced pressure, and were heated and melted while the sealing portion forming bodies were pressurized. Thus, a sealing portion was formed between the structure A and the counter substrate. At this time, the thickness of the sealing portion was 40 μm, and the width of the sealing portion was 2 mm.

Next, the connecting terminal 16 and the metal substrate 51 of the counter substrate 50 were connected by a conductive member 90 in the following manner.

That is, first, silver particles (average particle diameter:3.5 μm), carbon (average particle diameter:500 nm) and a polyester based resin was dispersed in a solvent composed of diethylene glycol monoethyl ether acetate to prepare a first conductive paste. At this time, the silver particles, the carbon, the polyester based resin and the solvent were mixed in a mass ratio of 70: 1: 10: 19.

On the other hand, silver particles (average particle diameter: 2 μm) and the polyester based resin was dispersed in a solvent composed of ethylene glycol monobutyl ether acetate to prepare a second conductive paste. At this time, the silver particles, the polyester based resin and the solvent were mixed in a mass ratio of 65: 10: 25.

Then, the first conductive paste was applied on the metal substrate 51 to form part of a precursor of the body part 92 and part of a precursor of the wiring part 91. Thereafter, the second conductive paste was applied to part of the precursor of the body part 92 and part of the precursor of the wiring part 91, and was applied to connect the connecting terminal 16 on the first current extracting portion 12B and part of the precursor of the wiring part 91. Thus, a precursor of the conductive member was formed. Then, the precursor of the conductive member 90 was heated and cured at 85°C for 12 hours to form the conductive member 90. Thus, the conductive member 90 including the body part 92 and the three wiring parts 91 was formed. At this time, the body part 92 and part of three wiring parts 91 were integrally formed to have a dimension of 41.2 mm × 4.5 mm × 60 μm in thickness and the remaining part of the three wiring parts 91 was formed to have a dimension of 2 mm × 4.7 mm × 30 μm in thickness, respectively.

Next, the protective layer 30 composed of a polyimide tape (Product name "tesa tape 67350", Tesa tape K.K, linear expansion coefficient: 30 ppm/°C) having a thickness of 50 μm was stuck to cover the photoelectric conversion cell 20. At this time, the protective layer 30 was formed so that it covered the photoelectric conversion cell 20 as well as the region excluding the first external connecting terminal 15a and the second external connecting terminal 15b of the region on the transparent substrate 11. That is, the protective layer 30 was stuck to cover and hide the photoelectric conversion cell 20 as well as the outer insulating layer 70b of the insulating layer 70, the Connecting Terminal-External Connecting Terminal region 101, the Wiring-External Connecting Terminal region 102, the Inter-External Connecting Terminal region 103 and the wiring-connecting terminal region 104. At this time, the protective layer 30 was stuck so that it covered the main surface 91a of the conductive member 90 and so that in a case where the photoelectric conversion element 100 was viewed in the direction Y orthogonal to the cell installation surface 11b, the peripheral edge part 30A of the protective layer 30 extended to the Connecting Terminal-External Connecting Terminal region 101 between the connecting terminal 16 and the first external connecting terminal 15a beyond the connecting terminal 16 and the resin layer of the peripheral edge part 30A of the protective layer 30 was directly adhered to the Connecting Terminal-External Connecting Terminal region 101. In the above-mentioned manner, the photoelectric conversion element 100 was obtained.

(Examples 2 to 4)

The photoelectric conversion elements were manufactured in the same manner as Example 1 except that the spacing L between the first external connecting terminal 15a and the connecting terminal 16 was set as shown in Table 1.

(Examples 5 to 8)

The photoelectric conversion elements were manufactured in the same manner as Example 1 except that no protective layer was provided and the Connecting Terminal-External Connecting Terminal region 101 was exposed and the spacing L between the first external connecting terminal 15a and the connecting terminal 16 was set as shown in Table 1.

(Comparative Examples 1 to 4)

The photoelectric conversion elements were manufactured in the same manner as Example 1 except that no protective layer was provided, the spacing L between the first external connecting terminal 15a and the connecting terminal 16 was set as shown in Table 1, and a glass layer having a thickness of 30 μm and composed of low-melting glass was directly adhered on the Connecting Terminal-External Connecting Terminal region 101. At this time, regarding the glass layer, the length p (mm) along a direction parallel to the width direction of the connecting terminal 16 was set as shown in Table 1 and the length along a direction parallel to the longitudinal direction of the connecting terminal was set to 9 mm.

(Comparative Examples 5 to 8)

The photoelectric conversion elements were manufactured in the same manner as Example 1 except that no protective layer was provided, the first external connecting terminal 15a, the connecting terminal 16 and a silver layer connecting these were formed and the spacing L between the first external connecting terminal 15a and the connecting terminal 16 was set as shown in Table 1.

[Property Evaluation]

For the photoelectric conversion elements of Examples 1-8 and Comparative Examples 1 to 8 obtained as described above, photoelectric conversion characteristic, durability, and manufacturing yield of the photoelectric conversion element with a lead wire were evaluated in the following manner.

<Photoelectric Conversion Characteristic>

20 pieces of photoelectric conversion elements were prepared for each of Examples 1 to 8 and Comparative Examples 1 to 8. For these photoelectric conversion elements, power generation amount (μW) and Fill Factor FF were measured with light of an illuminance of 200 lux or 2000 lux irradiated from a white LED. The results are shown in Table 1. In addition, acceptance criteria of the photoelectric conversion characteristic was as follows:
(Acceptance criteria) 280 W or more of power generation amount at an illuminance of 200 lux and 2800 W or more of power generation amount at an illuminance of 2000 lux.

<Manufacturing yield>

20 pieces of photoelectric conversion elements were prepared for each of Examples 1 to 8 and Comparative Examples 1 to 8. For these photoelectric conversion elements, lead wires were connected to the first external connecting terminals 15a by soldering. Then, the number of the photoelectric conversion elements in which problems occurred of 20 pieces of photoelectric conversion elements was determined and then manufacturing yield was calculated based on the following equation:

$$Manufacturing\ Yield = 100 \times (20-Q)/20$$

In addition, "Problem" is disconnection of the conductive member occurred during soldering work (including patial disconnection), heat fusion or heat discoloration. Further, acceptance criteria on the manufacturing yield was set as followed.
(Acceptance criteria) 100% of manufacturing yield

<Durability>

20 pieces of photelectric conversion elements were prepared for each of Examples 1 to 8 and Comparative Examples 1 to 8. For these photelectric conversion elements, heat cycle tests in accordance with JIS C 8938 were conducted and power generation amounts after the tests were measured with light of 200 lux irradiated from a white LED. The results are shown in Table 1.

[Table 1]

| | Structure Provided on First Connecting Terminal-External Connecting Terminal | | Spacing Between First Connecting Terminal-External Connecting Terminal L (mm) | Photoelectric Conversion Characteristic | | | | Manufacturing Yield of Photoelectric Conversion Element with Lead Wire (%) | Durability |
| | | | | 200 lux | | 2000 lux | | | Power Generation Amount ($\mu$W) |
| | Kind | Length p (mm) | | Power Generation Amount ($\mu$W) | Fill Facter (FF) | Power Generation Amount ($\mu$W) | Fill Facter (FF) | | |
| Example 1 | Polyimide tape | 3.7 | 4.0 | 280.7 | 0.703 | 2806.7 | 0.687 | 100 | 261.1 |
| Example 2 | Polyimide tape | 1.8 | 2.0 | 281.1 | 0.704 | 2810.2 | 0.689 | 100 | 264.2 |
| Example 3 | Polyimide tape | 0.8 | 1.0 | 285.9 | 0.713 | 2859.4 | 0.706 | 100 | 265.9 |
| Example 4 | Polyimide tape | 0.3 | 0.5 | 288.0 | 0.720 | 2877.6 | 0.707 | 100 | 267.8 |
| Example 5 | - | - | 4.0 | 280.4 | 0.701 | 2803.0 | 0.687 | 100 | 252.360 |
| Example 6 | - | - | 2.0 | 282.0 | 0.705 | 2815.2 | 0.690 | 100 | 250.980 |
| Example 7 | - | - | 1.0 | 284.4 | 0.711 | 2868.2 | 0.703 | 100 | 250.272 |
| Example 8 | - | - | 0.5 | 287.6 | 0.719 | 2888.6 | 0.708 | 100 | 255.964 |
| Comparative Example 1 | Glass layer | 3.4 | 4.0 | 270.8 | 0.677 | 2660.2 | 0.652 | 100 | 238.304 |
| Comparative Example 2 | Glass layer | 1.6 | 2.0 | 272.8 | 0.682 | 2705.0 | 0.663 | 100 | 242.792 |
| Comparative Example 3 | Glass layer | 0.6 | 1.0 | 277.2 | 0.693 | 2766.2 | 0.678 | 100 | 243.936 |
| Comparative Example 4 | Glass layer | 0.3 | 0.5 | 279.6 | 0.699 | 2794.8 | 0.685 | 100 | 248.844 |
| Comparative Example 5 | Silver layer | 4.0 | 4.0 | 287.2 | 0.718 | 2909.0 | 0.713 | 95 | 255.608 |
| Comparative Example 6 | Silver layer | 2.0 | 2.0 | 288.8 | 0.722 | 2913.1 | 0.714 | 90 | 262.808 |

| | Structure Provided on First Connecting Terminal-External Connecting Terminal | | Spacing Between First Connecting Terminal-External Connecting Terminal L (mm) | Photoelectric Conversion Characteristic | | | | Manufacturing Yield of Photoelectric Conversion Element with Lead Wire (%) | Durability |
|---|---|---|---|---|---|---|---|---|---|
| | | | | 200 lux | | 2000 lux | | | Power Generation Amount ($\mu$W) |
| | Kind | Length p (mm) | | Power Generation Amount ($\mu$W) | Fill Facter (FF) | Power Generation Amount ($\mu$W) | Fill Facter (FF) | | |
| Comparative Example 7 | Silver layer | 1.0 | 1.0 | 289.2 | 0.723 | 2921.3 | 0.716 | 90 | 263.172 |
| Comparative Example 8 | Silver layer | 0.5 | 0.5 | 290.4 | 0.726 | 2933.5 | 0.719 | 70 | 264.264 |

From the results shown in Table 1, the photoelectric conversion elements of Examples 1 to 8 achieved the acceptance criteria in terms of photoelectric conversion characteristic, durability, and manufacturing yield of the photoelectric conversion element with a lead wire. In contrast, the photoelectric conversion elements of Comparative Examples 1 to 8 did not achieve the acceptance criteria in terms of any of photoelectric conversion characteristic, durability, and manufacturing yield of the photoelectric conversion element with a lead wire.

From the above results, according to the photoelectric conversion element of the present invention, it was confirmed that the photoelectric conversion element is capable of manufacturing a photoelectric conversion element with a lead wire with high yield while having excellent photoelectric conversion characteristic.

EXPLANATIONS OF REFERRENCE NUMERALS

11 ... Transparent substrate
11b ... Cell installation surface (One surface)
12A ... Electrode
12B ... First current extracting portion
15a ... First external connecting terminal
16 ... Connecting terminal
20 ... Photoelectric conversion cell
30 ... Protective layer
30A ... Peripheral edge part of protective layer
50 ... Counter substrate
51 ... Metal substrate
60 ... Sealing portion
70 ... Insulating layer
90 ... Conductive member
91 ... Wiring part
91a ... Main surface of the wiring part on side facing away from transparent substrate
100, 200 ... Photoelectric conversion element
101 ... Connecting Terminal-External Connecting Terminal region
102 ... Wiring-External Connecting Terminal region
Y ... Direction orthogonal to one surface of transparent substrate

Claims

1. A photoelectric conversion element, comprising:

a transparent substrate;
at least one photoelectric conversion cell provided on one surface of the transparent substrate; and,
a conductive first current extracting portion provided on the one surface of the transparent substrate and used for extracting a current from the at least one photoelectric conversion cell,

wherein the photoelectric conversion cell includes:

an electrode provided on the one surface of the transparent substrate;
a counter substrate facing the electrode and including a metal substrate; and
a ring-shaped sealing portion provided between the transparent substrate and the counter substrate,

the photoelectric conversion element comprising:

a first external connecting terminal provided on the first current extracting portion;
a connecting terminal provided separated from the first external connecting terminal between the first external connecting terminal and the sealing portion on the first current extracting portion; and
a conductive member connecting the connecting terminal and the metal substrate, and
wherein a glass material is not directly adhered to a Connecting Terminal-External Connecting Terminal region between the connecting terminal and the first external connecting terminal.

**2.** The photoelectric conversion element according to claim 1, wherein the Connecting Terminal-External Connecting Terminal is exposed.

**3.** The photoelectric conversion element according to claim 1 or 2, further comprising:

a conductive second current extracting portion provided on the one surface of the transparent substrate and used for extracting a current from the at least one photoelectric conversion cell;

a second external connecting terminal provided on the second current extracting portion; and

a current collecting wiring provided on the second current extracting portion,

wherein one end of the current collecting wiring is connected at a position separated from the second external connecting terminal between the second external connecting terminal and the sealing portion on the second current extracting portion,

the other end of the current collecting wiring is connected at a position on the outside of the sealing portion on the electrode contained in one photoelectric conversion cell of the at least one photoelectric conversion cell, and

a Wiring-External Connecting Terminal region between the one end of the current collecting wiring and the second external connecting terminal is exposed.

**4.** The photoelectric conversion element according to claim 1, further comprising:

a protective layer provided on the side facing the one surface of the transparent substrate, the protective layer covering and protecting the at least one photoelectric conversion cell,

wherein the protective layer includes a resin layer on the side facing the transparent substrate,

the conductive member includes a wiring part,

the protective layer covers at least a main surface on the side facing away from the transparent substrate of the wiring part and is fixed at the metal substrate of the at least one photoelectric conversion cell,

in a case where the photoelectric conversion element is viewed in a direction orthogonal to the one surface of the transparent substrate, a peripheral edge part of the protective layer extends to the Connecting Terminal-External Connecting Terminal region between the connecting terminal and the first external connecting terminal beyond the connecting terminal, and

the resin layer of the peripheral edge part of the protective layer is directly adhered to the Connecting Terminal-External Connecting Terminal region.

**5.** The photoelectric conversion element according to claim 4, wherein a linear expansion coefficient of the protective layer is smaller than a linear expansion coefficient of the sealing portion.

**6.** The photoelectric conversion element according to claim 5, wherein the linear expansion coefficient of the protective layer to the linear expansion coefficient of the sealing portion is 0.5 or less.

**7.** The photoelectric conversion element according to claim 5 or 6, wherein the linear expansion coefficient of the protective layer to the linear expansion coefficient of the sealing portion is 0.15 or more.

**8.** The photoelectric conversion element according to any one of claims 4 to 7, further comprising:

a conductive second current extracting portion provided on the one surface of the transparent substrate and used for extracting a current from the at least one photoelectric conversion cell;

a second external connecting terminal provided on the side facing the one surface of the transparent substrate; and

a current collecting wiring provided on the second current extracting portion,

wherein one end of the current collecting wiring is connected at a position separated from the second external connecting terminal between the second external connecting terminal and the sealing portion on the second current extracting portion,

the other end of the current collecting wiring is connected at a position on the outside of the sealing portion on the electrode contained in one photoelectric conversion cell of the at least one photoelectric conversion cell, and

in a case where the photoelectric conversion element is viewed in a direction orthogonal to the one surface of the transparent substrate, a peripheral edge part of the protective layer extends to the Wiring Terminal-External Connecting Terminal region between the one end of the current collecting wiring and the second external connecting terminal beyond the one end of the current collecting wiring, and

the resin layer of the peripheral edge part of the protective layer is directly adhered to the Wiring-External Connecting Terminal region.

9. The photoelectric conversion element according to any one of claims 4 to 8, wherein the resin layer contains a polyimide resin.

10. The photoelectric conversion element according to any one of claims 4 to 9, wherein the resin layer is black.

# Fig.1

# Fig.2

100

15a
30A
101
91d
91a
30
91(90)
91c
51
50
52
80
20
60
Y
11b
60
70a (70)
40
11a
11 12A(12)
13
70a (70)
60
40
16
12B(12)
70b (70)

# Fig.3

11  11b

12A(12)

40

12C(12)    12D(12)    40    12B(12)

# Fig.4

# Fig.5

# Fig.6

# Fig.7

## INTERNATIONAL SEARCH REPORT

| International application No. |
| --- |
| PCT/JP2017/040825 |

A. CLASSIFICATION OF SUBJECT MATTER
Int. Cl. H01G9/20(2006.01)i

According to International Patent Classification (IPC) or to both national classification and IPC

B. FIELDS SEARCHED

Minimum documentation searched (classification system followed by classification symbols)
Int. Cl. H01G9/20, H01L31/04

Documentation searched other than minimum documentation to the extent that such documents are included in the fields searched
Published examined utility model applications of Japan       1922-1996
Published unexamined utility model applications of Japan     1971-2017
Registered utility model specifications of Japan             1996-2017
Published registered utility model applications of Japan     1994-2017

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
| --- | --- | --- |
| X<br>Y | JP 2014-130807 A (FUJIKURA LTD.) 10 July 2014, claims, paragraphs [0102]-[0105], fig. 7-8 (Family: none) | 1-2<br>3-4,8-10 |
| Y | WO 2016/052452 A1 (FUJIKURA LTD.) 07 April 2016, paragraph [0063], fig. 2 & US 2017/0301483 A1, paragraph [0076], fig. 2 & EP 3203490 A1 & CN 106575580 A | 3,8-10 |

☒ Further documents are listed in the continuation of Box C.    ☐ See patent family annex.

| | |
| --- | --- |
| *    Special categories of cited documents:<br>"A"  document defining the general state of the art which is not considered to be of particular relevance<br>"E"  earlier application or patent but published on or after the international filing date<br>"L"  document which may throw doubts on priority claim(s) or which is cited to establish the publication date of another citation or other special reason (as specified)<br>"O"  document referring to an oral disclosure, use, exhibition or other means<br>"P"  document published prior to the international filing date but later than the priority date claimed | "T"  later document published after the international filing date or priority date and not in conflict with the application but cited to understand the principle or theory underlying the invention<br>"X"  document of particular relevance; the claimed invention cannot be considered novel or cannot be considered to involve an inventive step when the document is taken alone<br>"Y"  document of particular relevance; the claimed invention cannot be considered to involve an inventive step when the document is combined with one or more other such documents, such combination being obvious to a person skilled in the art<br>"&"  document member of the same patent family |

| Date of the actual completion of the international search | Date of mailing of the international search report |
| --- | --- |
| | |

| Name and mailing address of the ISA/<br>    Japan Patent Office<br>    3-4-3, Kasumigaseki, Chiyoda-ku,<br>    Tokyo 100-8915, Japan | Authorized officer<br><br>Telephone No. |

Form PCT/ISA/210 (second sheet) (January 2015)

EP 3 528 269 A1

**INTERNATIONAL SEARCH REPORT**

International application No.

PCT/JP2017/040825

C (Continuation). DOCUMENTS CONSIDERED TO BE RELEVANT

| Category* | Citation of document, with indication, where appropriate, of the relevant passages | Relevant to claim No. |
|---|---|---|
| Y | WO 2011/135811 A1 (NIPPON STEEL & SUMIKIN CHEMICAL CO., LTD.) 03 November 2011, claims, paragraphs [0017], [0021], fig. 1 & US 2013/0037089 A1, claims, paragraphs [0033], [0045], fig. 1 & EP 2565980 A1 & CN 102870274 A & TW 201218396 A1 | 4, 8-10 |
| Y | JP 2015-170774 A (LINTEC CORP.) 28 September 2015, claims, paragraph [0020] (Family: none) | 10 |
| A | JP 2016-127037 A (NISSHA PRINTING) 11 July 2016, & WO 2016/104047 A1 | 1-10 |
| A | JP 2014-113930 A (MITSUBISHI CHEM CORP.) 26 June 2014, (Family: none) | 1-10 |

Form PCT/ISA/210 (continuation of second sheet) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2016103495 A